# EUROPEAN PATENT SPECIFICATION

(11) **EP 2 242 235 B1**
(45) Date of publication and mention of the grant of the patent: **11.04.2012**
(21) Application number: 09158127.2
(22) Date of filing: 17.04.2009
(51) Int. Cl.: G06Q 10/00, H04L 29/08, H04W 8/00, H04W 4/02

(54) **Method and apparatus for tagging a social environment**
Verfahren und Vorrichtung zum Kennzeichnen eines sozialen Umfelds
Procédé et appareil pour le marquage d'un environnement social

(43) Date of publication of application: 20.10.2010
(73) Proprietor: NTT DoCoMo, Inc., Tokyo (JP)
(72) Inventor: Fahrmair, Michael, 81375, Munich (DE); Kellerer, Wolfgang, 82256, Fuerstenfeldbruck (DE)
(74) Representative: Betten & Resch

(56) References cited:
- WO-A-01/44978
- WO-A1-2008/079203
- US-A1- 2002 184 418
- US-A1- 2005 289 469
- US-A1- 2008 085 706
- KOOLWAAIJ J ET AL: "Context Watcher - sharing context information in everyday life" PROCEEDINGS OF THE SECOND IASTED INTERNATIONAL CONFERENCE ON WEB, TECHNOLOGIES, APPLICATIONS, AND SERVICES ACTA PRESS ANAHEIM, CA, USA, 2006, pages 12-21, XP002566303 ISBN: 0-88986-575-2

## Description

### FIELD OF INVENTION

The invention relates to a method and an apparatus for tagging social environments with qualitative attributes.

### BACKGROUND OF THE INVENTION

Community based tagging services are a widely spread solution when it comes to building user defined taxonomies for an unstructured search space of entities in a bottom up approach (in contrast to top down approaches that rely on onthologies and inference to classify information but work best in structured search spaces).

Social relations between users can be additionally used to filter or infer recommendations based on such tags.

However; when applied to entity sets that consist of (or contain) identities of persons (i.e. a social environment) common tagging solutions suffer from a basic problem: they have been developed in the context of world wide web pages and therefore require fixed and reliable references. Usually there is a direct relation necessary between a tag and the tagged entity (e.g. a person). This has a number of consequences:
1.) For untagged entities it is not possible to infer a tag information. Therefore the tagging system needs a critical mass of tagged entities to become useful.
2.) Because of the direct relation between tag and tagged entity it is legally problematic to attach tags with negative semantic, especially if it comes to tagging of people.
3.) Tag/entity relations are usually static and permanent. It is not possible to infer tags with only a temporary meaning or to depend the tag semantics on the actual query. For example it is not possible to have two different tag meanings for one entity depending on the user querying the tags.

All three characteristics make current tagging solutions suboptimal for tagging objects or entities in a physical environment (with dynamically changing/moving objects) or for socially and safety related benchmarks of people.

WO 01/44978 A2 discloses a system for computer-based storing of information about a current state so that later recall of the information can augment human memories. In particular, when information about a current event of interest is to be stored, a variety of current state information of different types (e.g., video, audio, and textual information) about the environment and about a user can be acquired via sensors and other input devices. The variety of state information can then be associated together as a group and stored for later retrieval. Other information can also be associated with the group, such as one or more recall tags that facilitate later retrieval of the group, or one or more annotations to provide contextual information when the other state information is later retrieved and presented to the user. When information about a past event is to be recalled, one or more identifying recall tags can be received that are used to identify one or more state information groups that match the identifying tags. Some or all of the previously-acquired state information for the identified state information groups can then be presented to the user on appropriate output devices. Other information, such as annotations, can also be presented to the user in order to describe the state information and thus assist the user's recollection of the previous state when the information was stored.

US 2005/0289469 A1 discloses an apparatus and a system, as well as a method and article, may operate to store persistent context tag information associated with a geographic location. The persistent context tag information may be subsequently published to a mobile computing device located at a mobile location within a selected distance from the geographic location.

KOOLWAAIJ J ET AL: "Context Watcher - sharing context information in everyday live" PROCEEDINGS OF THE SECOND IASTED INTERNATIONAL CONFERENCE ON WEB, TECHNOLOGIES, APPLICATIONS, AND SERVICES ACTA PRESS ANAHEIM, CA, USA, 2006, pages 12-21, XP002566303 ISBN: 0-88986-575-2 describes the context watcher which is a mobile application that enables mobile phone users to easily and unobtrusively share personal context data such as their location, heart rate, speed, or view with their mutual consent.

US 2002/0184418 A1 discloses a system and method for providing location mapping and location determining. The system and method use known location of other nearby devices to determine the location of a mobile wireless device.

WO 2008/079203 A1 discloses detecting and reporting a picocell by a mobile station. An exemplary method of communicating includes storing a locating neighbor list that corresponds to a mobile station being in a communication range of a selected picocell. Upon receiving a current neighbor list, a determination is made whether the current neighbor list corresponds to the stored, locating neighbor list. If there is sufficient correspondence, that indicates that the mobile station is in a communication range of the picocell.

US 2008/0085706 A1 discloses a mobile device system and a mobile device that can flexibly respond to situations where the user carries a different combination of mobile devices on different days and can prevent the mobile devices from being misplaced. The mobile device system includes three or more mobile devices, wherein each mobile device Includes a device detection unit for periodically detecting other mobile devices located within a predetermined range of the mobile device, a function-restricting unit for restricting a predetermined function, and a control unit, and when two or more mobile devices of the other mobile devices detected by the device detection unit are no longer detected, the control unit operates the function-restricting unit.

### SUMMARY OF THE INVENTION

The present invention is defined in the independent claims. The dependent claims define embodiments of the invention.

According to one embodiment there is provided a method for tagging an environment with a certain qualitative attribute by a computing device of a user, said method comprising:
detecting by said computing device of said user at least two other computing devices and their respective identifiers which identify them;
compiling a set of information elements which comprises said at least two identifiers identifying said two computing devices;
offering to the user a plurality of qualitative attributes for tagging the environment as represented by said set of information elements;
after said user having selected at least one of said offered attributes as tag for said environment, storing said tag selected by said user together with said set of information elements in a storage together with other sets of information elements representing other environments which have previously been tagged.

In this way the tagging is not carried out traditionally as related to a certain person or location, instead there is generated a kind of a "cloud" of information to which the tag is attached and which represents the environment but is not specific for a certain person or location. Instead it remains to some extent "fuzzy", but still carries some information about the environment as a whole which can later be used for evaluation, e.g. by calculating distance measures.

According to one embodiment said set of elements comprises more than two identifiers of computing devices present in said environment, and/or one or more of the following: location information of said environment;
time information;
further information characterizing or describing the environment to be tagged by the user.

In this way not only "social information" about the presence of certain people but also further information can be used to characterize or represent a certain environment for situation.

According to one embodiment said set of information elements is composed or created such that it becomes possible to calculate a distance measure or a similarity measure between two sets of information elements representing different environments.

In this way the distance measurement can then later be used for evaluation, e.g. to find similar environments or also for automatic tagging. The creation of the set of elements such that a distance measure becomes possible can be e.g. achieved by using a vector style compilation of the set of elements such that the vectorial distance can then be calculated based on the individual components. As regards the social information this can also be achieved by using a social graph for the personal information.

According to one embodiment said method comprises:
detecting the presence of other computing devices and automatically generating a set of information elements including identifiers of computing devices which are present in said environment;
storing said set of information elements, and
comparing said generated and stored set of information elements with previously stored sets of information elements describing previously tagged environments in order to identify one or more environments similar to the present one.

In this way the evaluation can be performed. This can be done by using the similarity or distance measure for identifying similar sets of elements/environments. The process can be speeded up by using a hash code calculated based on the set of element which preserves distances. Then the lookup can be done faster.

According to one embodiment the method further comprises:
determining a distance measure between the set of information elements representing the environment to be evaluated and sets of information elements representing previously stored environments in order to find those previously stored environments which are similar to the environment to be evaluated.

By using the distance measure the similar sets of elements can be found.

According to one embodiment the method further comprises:
Executing the search for similar environments previously tagged and stored to such environments which fulfil a certain qualitative attribute, and
outputting an notification to the user if the similarity measure for one or more previously stored environments fulfilling the certain selected attribute exceeds a predetermined threshold.

In this way the search can be limited to specific desired qualitative attributes such as "danger" or "entertaining" or anything else which is available as an attribute and which has been used as tag.

According to one embodiment said set of elements comprises said identifiers of computing devices as personal information regarding the presence of individuals in said environment, and wherein
a distance measure is calculated based on calculating a personal distance which represents a social distance between the groups of persons belonging to different environments.

This enables to use the presence information regarding persons in the environments to calculate (social) distances between environments.

According to one embodiment the said distance measure representing said social distance is calculated based on a social graph.

In this way the connections between persons can be represented and can be used to calculate social distances.

According to one embodiment wherein said social graph is composed of connections between the persons whose presence has been detected through their computing devices, where a connection between two persons in said social graph is based on a parameter or a metric representing their relationship, and wherein said parameter or metric preferably comprises one or more or a combination of the following:
the number of common encounters of said two persons;
the time period how long they have been geographically close to each other;
the geographic distance between them.

This is a suitable way of implementing the calculation of personal or social distances between environments.

According to one embodiment said set of information elements representing an environment comprises personal information about the presence of persons which is used to calculate a personal or social distance two environments, and said set of information elements further comprising other context parameters describing the context of said environment which can then be used to calculate other distance components, wherein the personal or social distance which has been calculated based on the presence of persons and the other distance components are then combined into a total combined distance representing the distance between two environments.

In this way not only social distances but also other distances can be taken into account, such as geographic distances or time distances.

According to one embodiment the method further comprises:
automatically determining a qualitative attribute for the present environment, and/or
wherein said computing device of said user and/or said other computing devices are mobile devices.

In this way the situation or environment to be evaluated can be evaluated quantitatively and qualitatively for the benefit of the user. E.g. a user may then be informed this environment is "dangerous" as a result of the automatic evaluation.

Such automatic evaluation of a present environment may be carried out continuously or repeatedly.

Furthermore, the computing device of the user and or the other computing devices of the embodiments of the invention may be mobile devices, such as e.g. mobile terminals, smartphones, PDAs, or anything alike.

According to one embodiment said qualitative attribute for said environment to be evaluated is determined based on:
combining attributes of the previously stored environments weighed based on the respective distances of these previously stored environments to the environment to be evaluated, and
thereby calculating an estimate of the attribute or tag value for said environment to be evaluated.

In this way there can be carried out a kind of interpolation to estimate a qualitative assessment of the present environment based on previously executed and stored taggings.

According to one embodiment there is provided a computing device for tagging an environment with a certain qualitative attribute a user, said computing device comprising:
a module for detecting by said computing device of said user at least two other computing devices and their respective identifiers which identify them;
a module for compiling a set of information elements which comprises said at least two identifiers identifying said at least other two computing devices;
a module for offering to the user a plurality of qualitative attributes for tagging the environment as represented by said set of information elements;
a module for after said user having selected at least one of said offered attributes as tag for said environment, storing said tag selected by said user together with said set of information elements in a storage together with other sets of information elements representing other environments which have previously been tagged.

Such a computing device can implement a mechanism according to an embodiment of the invention.

According to one embodiment the detection of the at least two other mobile devices is carried out such that only mobile devices which are (relatively) close to or co-located with the mobile device are detected. This can be done e.g. by detecting only mobile devices within a certain range or a certain distance from the device performing the detection. For example only mobile devices lying within the detection range of the detecting module may be detected, where the detecting range may be either manually adjusted (e.g. defining a range by coordinates) or may just be given by the detecting range of the detecting module (which may e.g. a near field communication device like bloototh, RFID device, or anything comparable).

The mobile device may further comprise:
a modules for performing a method according to further embodiment of the invention.

According to one embodiment there is provided a computer program comprising computer program code which when being executed on a computer enables said computer to carry out a method according to one of the embodiments of the invention.

### DESCRIPTION OF THE DRAWINGS

Fig. 1A and 1B schematically illustrates a scenario where an embodiment of the invention is used.
Fig. 2 schematically illustrates a mechanism according to an embodiment of the invention.
Fig. 3 schematically illustrates a mechanism according to a further embodiment of the invention.
Fig. 4 schematically illustrates an evaluation scenario according to an embodiment of the invention.
Fig. 5 schematically illustrates the calculation of a social distance and the resulting social graph according to the embodiment of Fig. 4.
Fig. 6 schematically illustrates a combined distance calculation between environments based on the geographic distance and the social distance according to an embodiment of the invention.
Fig. 7 schematically illustrates a tag interpolation according to an embodiment of the invention.
Fig. 8 schematically illustrates a learning mechanism according to an embodiment of the invention.

### DETAILED DESCRIPTION

The proposed solution in one embodiment comprises of mobile terminals (e.g. cell phones) that have both a global WAN connection and a short range wireless communication mechanism (called Near Field Communication (NFC), e.g. Bluetooth). The latter one has the capability to dynamically discover IDs (e.g. MAC addresses) of other mobile phones within the range of the mobile terminal.

To set a new tag instead of attaching the tag to a single reference entity, the tagging information is stored with a cloud that is built from a plurality of, in one embodiment all currently visible neighbours, time, location and possible other related contextual information.

An "environment" in an embodiment consists of at least two identified mobile devices (which may be identified by some NFC means which recognizes e.g. their MAC address). The identification of the mobile devices in some sense also identifies the persons which carry them or own them.

Since tagging a certain individual as "bad" or "dangerous" or tagging it with any other attribute is problematic from a privacy and legal point of view, the environment at least comprises identifiers which identify two different persons, such as the IDs or MAC addresses of two mobile phones. If such a set of information (person A and person B) is tagged, this preserves some degree of anonymity. Of course, the more persons or their identifiers are involved and tagged as a whole with a certain label, the anonymity increases.

This means that in one embodiment there is "tagged" a cloud of information elements which includes identifiers of at least two persons or their mobile devices, and such a cloud of information (or information set) is then "tagged" by assigning to it a certain qualitative attribute which describes the environment with respect to its characteristics. Preferably the attribute is selectable from a set of predetermined attributes available to the user for describing the certain environment.

Therefore, one may say that a certain social environment (or a "situation") is represented by a set of individual information elements, of which at least two are representative of persons which are present at the environment or at that situation. The information elements which are representing the individual persons are in one embodiment identifiers which identify the mobile devices of these persons, respectively. And these identifiers may be detected automatically by the user of a mobile phone through some near field communication means such as Bluetooth or others.

Other information elements may further be added to the "set" of information elements describing the situation or environment, and such other information elements may include e.g. further identifiers of other persons (or their mobile devices), and it may further include other descriptive information such as location (which may be derived from a GPS system), time, or any other qualitative information describing the situational context. Also the identifier which identifies the user himself who creates the tag may be included in the set of information elements.

The resulting set of informational elements may then be stored together with the label or tag which has been assigned to it by the user who creates the tag. The set of information elements and the tag or label which qualitatively describes the situation are then stored together as a multidimensional vector describing the situation in two respects, objectively (by the information elements like personal Ids, location, etc.) and subjectively by the tag assigned to the situation by the user. Tags may e.g. be "dangerous", "entertaining", "expensive", or any qualitative terms, preferable selected by the user from a list of predetermined classificator terms for classifying the situation.

In this way a distributed system and a method can be implemented that allows for evaluation of an overall descriptive tag of a social environment. A social environment (or "situation") may e.g. consist of any combination of the following contextual information: geographic location, visible neighbours, time, personal profile, non-visible neighbours.

As will become apparent later, the combination of the set of information elements and their tag may be used for evaluating a certain "new" situation by referring to situational tags which have been stored before. This can be done by comparing the new situation or its respective set of information elements (like the persons which are present) with previously stored sets of information to check whether a similar situation has already been labelled or tagged already by somebody before. In this way it becomes possible to automatically detect if a user enters an environment or a situation which has been labelled before, and this may even be used to identify situations which meet a certain criterion like "dangerous". It can be done according to one embodiment also by interpolating a situation that has not been tagged before in exactly this combination.

Users may e.g. in one embodiment set notification thresholds to be warned when entering an environment with a certain criterion (like "dangerous") or automatically avoid certain criteria in combination with navigation solutions.

For that purpose a present situation has to be compared with previously stored situations to look for similar situations as the present one. According to one embodiment this can be done by looking for such sets of elements (or "tag clouds") which are in terms of some multidimensional distance measure close to the present situation. This will be further explained later.

Now further embodiments will be described in the following.

An environment (or a situation) can be manually tagged by the user with a certain criterion or qualitative attribute. In one embodiment it may also be automatically by the network provider (e.g. by the number of emergency calls, e.g. in order to define and identify dangerous environments). To tag an environment instead of direct tags (which assigns a tag to an individual person) so called hyper-tags are used. Hypertags are not assigned to single individuals, but instead to a plurality of individuals which are present in a certain situation. A hypertag in this way is assigned to a set of information elements which described or represent the situational context. The set of information elements may - in addition to identifiers which identify a plurality of persons being present - identify further additional information representing the situational context such as location and time. One may say that there are identified information elements with the visible or detectable context of a situation, and these elements are compiled to a "set" of information elements representing the situation, and this "set" of information elements is assigned a tag, thereby altogether (the set of elements and the tag) forming a hypertag.

The hypertag then is a multidimensional representation of the situation which involves at least information elements representing two persons being present in the situation, and further it comprises the tag itself which is a qualitative attribute assigned to the situation by the user.

In this way there can be solved two main problems which would arise if "normal tagging" is used in physical environments:
First, between two situations or environments, a distance function can be calculated that allows to interpolate hypertag values for not already tagged environments, thus solving the problem that tagging information in real world environments is usually sparse.
Second hypertag distribution can be restricted by policy to opt-in subsets of a visible context. E.g. instead of tagging a specific person, the tag information is divided among (voluntary) users belonging to his environment in the tagging situation. This avoids legal issues (e.g. when placing a negative tag on a certain individual) or problems with misuse (e.g. it becomes much harder to manipulate a tag).

In the common sense, a tag is a descriptive label for an entity, e.g. a keyword attached to a website, person, place etc. For example, a certain subway station "XYZ" could have a tag "dangerous". Usual applications of tags are for example refinement of internet search queries (e.g. "-unhealthy +restaurant"). Tags can also be directly looked up (e.g. "XYZ->dangerous") or used in higher level inference (e.g. "if tag==dangerous then warn_user").

This kind of direct tagging however has certain disadvantages, for example tags can be wrong or imprecise (e.g. "XYZ" subway station is perfectly safe during daytime). Direct tags are also usually incomplete and non transient (e.g. a friend of a person that is tagged "violent" can most likely also be violent but may not tagged. Moreover the tag publisher can be legally held responsible if the target of the description does not consent with its meaning.

Tags can also be forged/manipulated for the same or similar reasons (e.g. cyber-mobbing). Last but not least direct tags can only be attached to "visible" entities, which means that switching/masking identity can remove/avoid negative tags.

These characteristics make it hard to apply direct tagging solutions for real-world descriptions of physical or social environments. For example direct tagging might be suitable to describe the nature of user generated content on a website (e.g. uploaded videos). Describing for example the safety of a real world environment however emphasizes above mentioned problems like the information being sparse, prone to manipulation and legal or other counter-attacks.

The indirect tagging with hypertags as described before in such applications has the following advantages:
- Problem: *Tag can be wrong or inaccurate*
   - Wrong tags only infect single situations not whole locations
- Problem: *Tags are usually incomplete and non transient*
   - Indirect situational tags are transient because of their distance function
- Problem: *Tag publisher can be legally held responsible*
   - Indirect tags cannot be looked up outside replication of (exactly) the same situation.
   - Indirect tags can be restricted to opt-in (agree by the person to be tagged on being part of a tag) or neutral (e.g. time) information
- Problem: *Tags can be forged*/*manipulated*
   - Tags cannot be targeted (because they always include more than one person ID and possibly further context) and affect all entities in the situation (including the tagger himself). Bad tag=>tag yourself bad, good tag => only visible as one opinion in same situation
- Problem: *Tags can only be attached to "visible" entities*
   - Tagging only the symptom (visible aspect) of a situation can include invisible/hidden correlations. This especially works for social graphs (small world phenomenon)

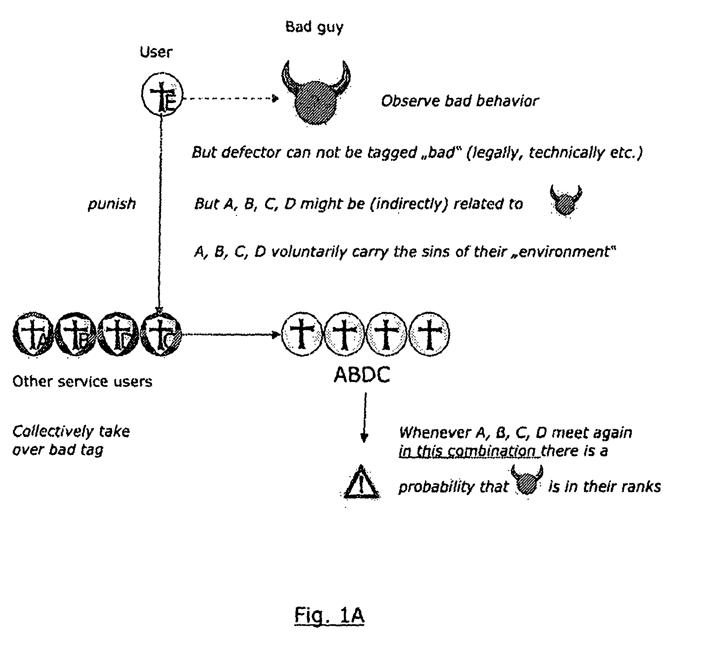

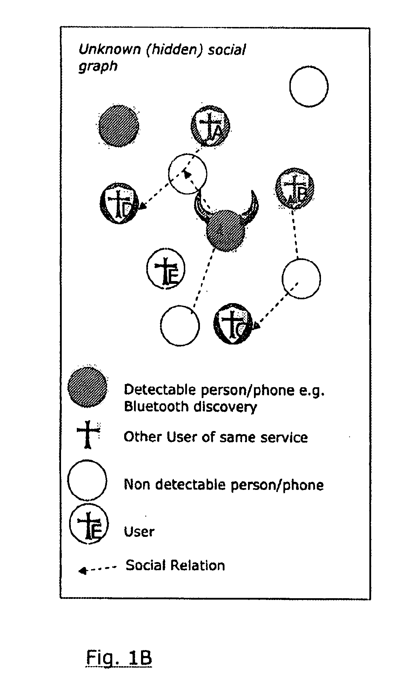

Now there will be explained an embodiment of the invention and its working principle in connection with Fig. 1A and 1B. Fig.1A shows the operation principle, Fig. 1B the parties involved.

Fig. 1A shows a situation where the user E is in an environment where there is present one "bad guy", however this "bad guy" may have no detectable mobile phone the ID of which could be detected. Nevertheless the mobile device of the user may be able to detect the presence of other mobile devices of users A, B, C, and D. These users (or the IDs of their phones in the specific combination A-B-C-D) are also representative of the situation or the environment. If these users may happen to show up again together, there is at least some probability that also the "bad guy" may be there.

Therefore the set of information elements A-B-C-D (the respective Ids of their mobile phones) can be used as a set of elements representative of the situation, and this set of elements may then be assigned a tag "dangerous".

In this way a "hypertag" is created which comprises A-B-C-D and the tag "dangerous", and this is stored in a storage, preferably where also other previously generated hypertags have been stored.

The thus stored hypertag can then be later used when evaluating a "new" situation, and this can be done by generating a "set of elements" which can be detected in the new situation and comparing this set of elements with previously stored sets of elements to look for similar ones.

Based on the similarity or a distance measure the system may then judge whether the new situation is similar to a previous situation. In such a case, e.g. if the similarity exceeds a certain threshold, a user may be alerted or notified.

In one embodiment the set of element which is created or detected to represent a certain environment uses all available detectable information which are presently available, such as the identifiers of all persons (or their mobile phones) which are present, the location, time, and any other information which may be available and which can be used when calculating a distance measure or similarity measure. In other words, only context which describes the environment and is viable to calculate based thereupon a distance function is used in generating the representation of the environment by a set of information elements.

Based on a calculated distance measure between previously stored environments and a present environment then the present environment can be evaluated.

For example, in one case the tag is assigned to all context information that are visible in the situation when the tag was created. This may e.g. be location: XYZ, time: 22:00, weekday: Saturday, Persons: A and B). Such a set of information elements would then in fact have the dimensions location, time, weekday, and personal information or "persons".

For then evaluating a new situation the set of information elements representing the new situation is then compared with previously stored ones. E.g. a previously stored tag (such as "dangerous") may be judged to apply also to a new situation if the same or a similar (regarding a distance measure) situation reoccurs.

E.g. (location XYZ, 8:00, Monday, Person Y) would not be tagged "dangerous" or found to be dangerous (assuming there is no short social graph distance between X and Y), neither would be (XYZ) or (A) alone. (XYZ, 22:10, Saturday, A-C) however most probably would be still "dangerous", although ultimately this depends on the algorithm to calculate the similarity measure.

Fig. 1B shows the parties involved in the scenario. The bad guy does not have a detectable mobile device, but persons A, B, C, and D have one, and they (in this embodiment) also agreed to use their ID in creating a tag.

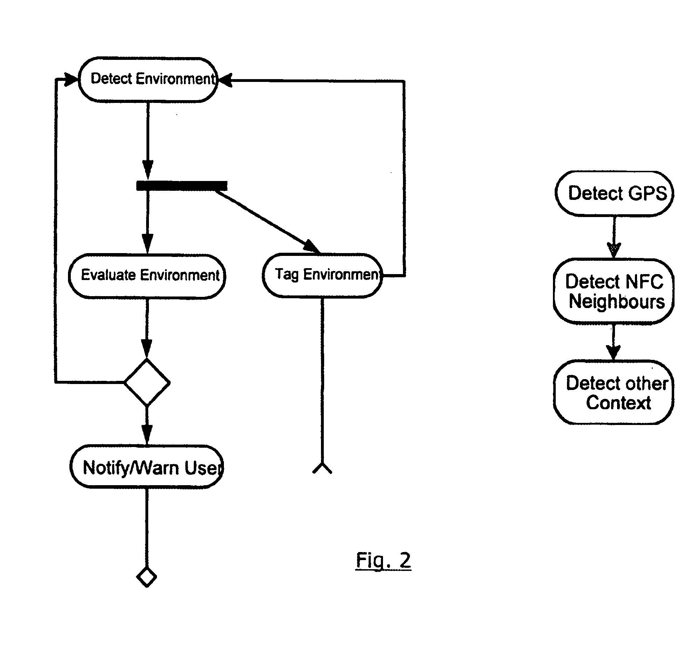

Fig. 2 schematically illustrates the main environment evaluation loop of a system according to one embodiment. In a first step, the context is detected that might describe an environment. In a second step this context is used to evaluate the current tag for this situation. If the tag matches a certain threshold, a warning/notification can be issued to a user.

Alternatively to evaluation, the user can add/modify the current environment's tag.

On the left-hand side Fig 2 shows the basic loop, on the right-hand side Fig. 2 shows the context information which are used in this embodiment, namely location information (from a GPS system), personal information detected by some NFC means, and possibly also other context, such as e.g. a personal profile of the users, time, or anything alike. This context information is then used to compile the set of elements which can be tagged or can be evaluated whether they are similar to a previously tagged set of information elements with respect to some similarity or distance measure.

As mentioned, the set of information elements after having been tagged is stored and then later compared with new sets of elements representing new environments. This in fact reduces to a nearest neighbour search in a multidimensional environment, and for that purpose hash values generated based on the multidimensional sets and representing them by a single value can be used.

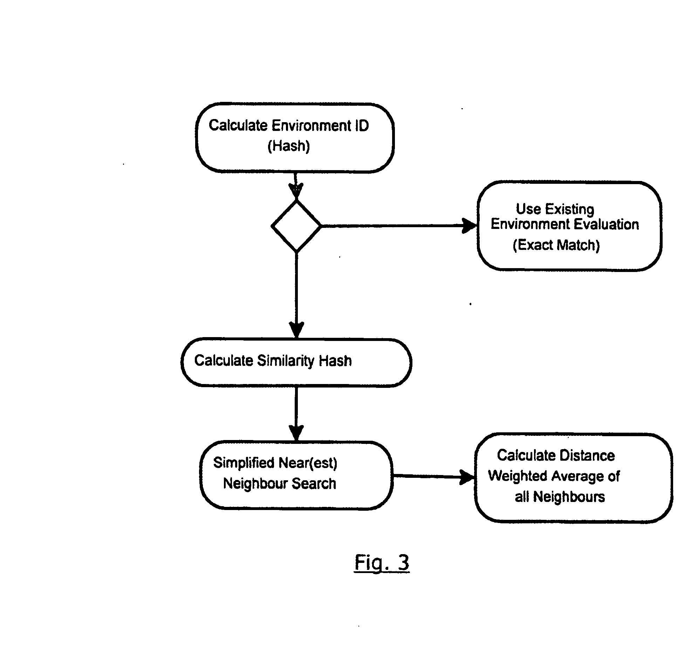

This is schematically illustrated in Fig. 3. Fig. 3 schematically shows a more detailed activity diagram of the evaluation functionality. To achieve efficient scalable performance the detected context state (the description of the environment by the set of information elements) that describes a certain situation is reduced to a hash based fingerprint (a hash function here preserves neighbour distance, which means similar situations result in similar hash values. This is common best practise, as will be apparent for the skilled person. Suitable approaches can be found by the skilled person in the field of "nearest neighbour search (nns) problems" in connection with locality sensitive hashing for which there exists a wealth of literature.

In one embodiment two cases are distinguished. If the exact situation has been tagged before the tag value simply is returned. If there is no matching tag, the nearest neighbour search returns a set of similar situations. For these neighbours, an actual distance (e.g. with respect to the physical location, with respect to the hops in the social graph for the persons involved, etc.) can be calculated. Calculation of the distance of geographic locations is straight forward. An example how the distance function can be calculated for the social graph in the example world model will be explained in somewhat more detail later, where a skilled person will understand that this also is only one possible example.

Based on the distance of the different context features (the "dimensions" of the set of information elements, like position, time, personal relationship), the general distance between the neighbour situations can be calculated by combining the individual distances to a combined one. A specific example for that will be explained in somewhat more detail later.

Such a resulting general distance of a presently detected new environment with respect to previously stored environments can be finally used to interpolate a tag value for the new environment in question. This will also be explained in somewhat more detail later for one embodiment.

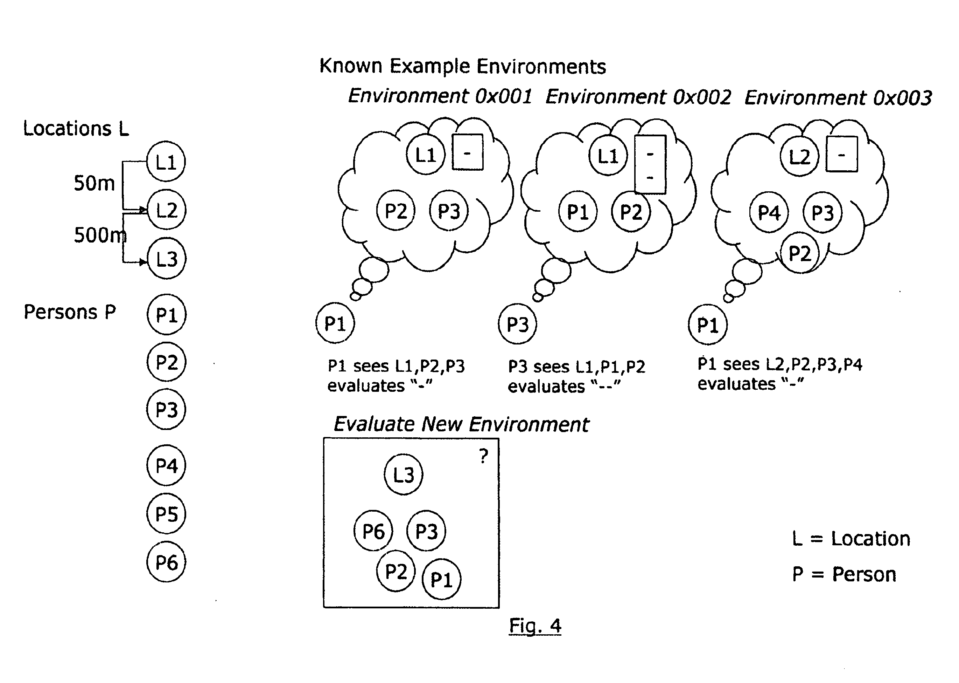

Now there will be described with reference to Fig. 4 an embodiment where an environment (or better to say: the set of information representing it) is just composed of persons and locations.

There are involved three different locations, L1, L2, and L3, and there are three previously tagged and stored environments, namely environment 0x001, environment 0x002, and environment 0x003. Further there is a new (present) environment which should be evaluated and which involves location L3, and the (detected IDs/phones representing) persons P1, P2, P3, and P6.

On the other hand, environment 0x001 had person P1 as the user tagging the environment and the other present persons were P2 and P3. The location information in this case was L1, and the tag assigned to the environment by the user P1, was a "minus" sign which could have the meaning of e.g. slightly negative.

Environment 0x002 also had location L1 and the present persons were P1 and P2. The user who tagged the environment in this case was P3, and he assigned it two minus signs, which could e.g. mean "strongly negative" and could be expressed in numbers by "-2", while the one minus sign could in numbers be expressed as "-1 ".

Finally, in case of environment 0x003 the (detectable) persons who were present were P4, P3, and P2, and the location information was L2. This environment was tagged by person P1 with one minus sign, in other words as "slightly negative" or "-1".

The environment which then should be newly evaluated involves location L3 and the persons P1, P2, P3, and P6.

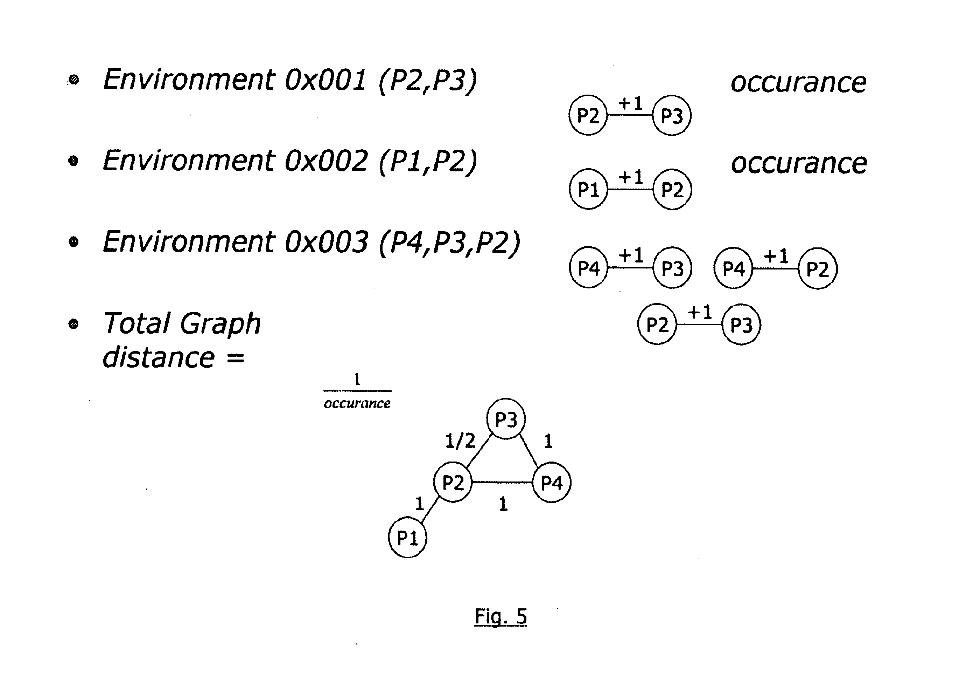

However, at first there will be explained in connection with Fig. 5 how the distance in a social graph may be calculated. In this example the number of common occurrences of pairs of persons are counted. For each environment the number of occurrences of pairs of persons is counted. The total graph distance between two persons can then be calculated as 1/number of occurrences. This leads in the given example to values "1" for each pair except for P2-P3 which is a combination which occurs in environment 0x001 and 0x003, so that the total number of occurrences is "2". This means that the distance for this pair is ½ as shown in Fig. 5. This is reasonable because pairs which occur more often may be regarded as being "closer", i.e. having less distance.

The resulting distance between arbitrary persons may be derived from this social graph shown in Fig. 5 by adding up the distances which have to be passed from one person to the other. This can result e.g. in distances as shown in the following
P2->P2=0
P3->P3=0
P4->P3=1
P4->P2=1
P4->P1=2
P2-> P 3=0, 5

Based on these resulting distances between individual persons one may then calculate the distance between sets of elements (or environments).

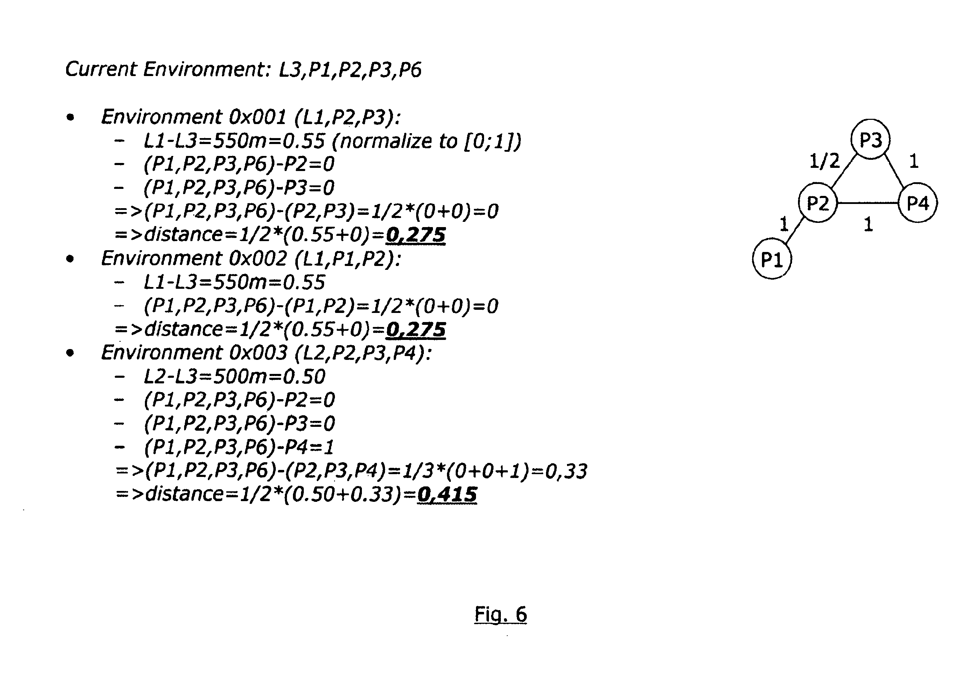

Fig. 6 now explains how according to one embodiment the distance between the environment to be evaluated and the previously stored environments can be calculated. As can be seen the distance is calculated for the individual components separately (e.g. for the location, and then for the individual persons which then are added up to a combined "person distance"), and then the "distance components" for location and "person distance" are added up with equal weight to a total distance. It will be understood by the skilled person that this is just one possible example of how the total distance may be calculated, and other examples, like the calculation of a vectorial distance, are also possible.

Let us e.g. consider the distance between 0x001 and the new environment.

For example at first the location distance is just calculated based on the geographical coordinates, possibly with some normalization to the range between 0 and 1. This leads to a value of 0,55.

Then for each person of the environment 0x001 its distance to the new environment is calculated, and then the (two) distances are added up with equal weight to a total "personal" distance. Since P2 and P3 both are also present in the new environment the personal distance for both is 0 and consequently also the combined personal distance.

Adding up the combined personal distance and the location distance with equal weight leads then to a total value of 0,275.

The same results for the distance between environment 0x002 and the new environment to be evaluated.

For the third environment 0x003 the result is different. First of all the location distance is different because it is the difference between L2 and L3 and not between L1 and L3. Furthermore, person P4 is not present in the new environment so that for person P4 its distance to the new environment cannot be 0. From the social graph of Fig. 5 it follows that its distance is 1 (hop), and therefore the total personal distance results in (0+0+1)/3 = 1/3 (because there are three personal distances, for P2, P3, and P4).

As a consequence the combined total distance which combines location distance and combined personal distance is (0,5+0,33)/2=0,415

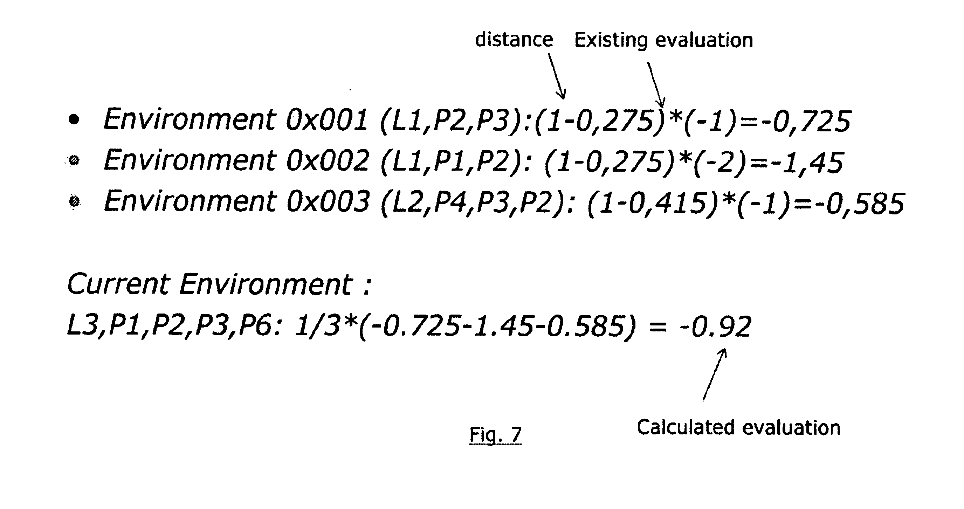

Once the distances have been calculated, it becomes possible to interpolate a tag value for the newly to be evaluated environment. This can be done by calculating a weighed sum of the previously stored tag values where the weights are based on the distances between the newly to be evaluated environment and the previously stored environments. This is schematically illustrated in Fig. 7. As shown in Fig. 7, for each previously stored environment 0x001 to 0x003 the tag value of this environment (-1 for 0x001, -2 for 0x002, and -1 for 0x003) is multiplied (weighed) with the respective distance from the new environment (or with 1 minus said distance), and these values are then summed up and divided by three (the number of previously stored and considered environments). This then gives an estimate for the tag value of the new (current) environment to be evaluated.

Such a calculated estimate of a tag value can then be used to evaluate the present environment. E.g. if the tag value exceeds a certain threshold and the attribute represented by the tag is "danger", then the user may automatically be notified or alerted if he enters an area where such an evaluation of the environment results.

In other words, the system according to one embodiment may continuously detect context data, compile it into sets of information to represent the environment, and the environment may then be evaluated as described. This process may be carried out repeatedly and may in this way provide the user with an automatic monitoring of his current environment with respect to certain qualitative attributes which have been expressed and stored previously as "tags" or "tag values".

The user may select certain types of attributes he wishes to have monitored in this way, like e.g. "danger" or "entertaining". The mechanism then will only search the stored environments for such sets of data which have these kinds of tags.

According to one embodiment the evaluation process to calculate a tag value for a specific situation can be improved by applying feedback when at a later time, a user actually attaches a new tag to an environment. The environment may at first be automatically evaluated as described before, and then the user tags it manually to give a feed back to a learning mechanism. Then the parameters of the evaluation mechanism can be adapted to take into account this feedback.

For this purpose according to one embodiment either variable distance weights or a variable evaluation algorithm can be introduced.

For example the encounter based distance in social graph described before (how often does a certain pair of persons occur) is replaced by a variable weight. Then the environment evaluation before and after setting a tag is compared. The difference in expectation and training stimulus (new tag) is then used to adapt weights in social distance graph. Alternatively it is possible to also modify other weights, e.g. geographic distance scaling slope, weight between geographic and social component etc.

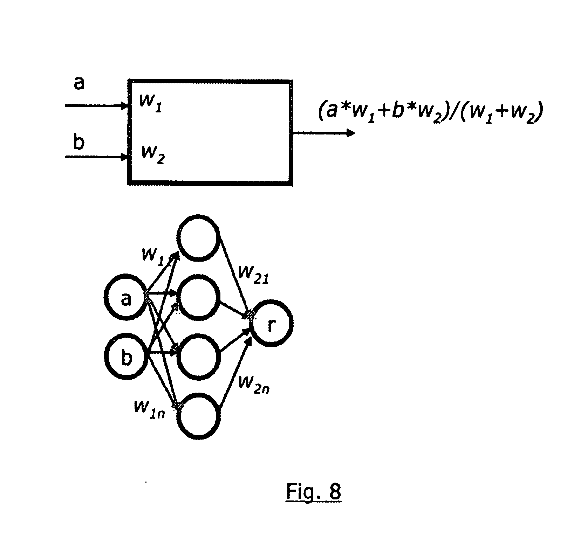

An example for a variable evaluation algorithm is to replace simple weighted average calculation by a dynamic algorithm (e.g. neuronal network) as illustrated in the bottom of Fig. 8, where the upper part shows the (static) approach and the lower part the learning approach which uses a neural network.

In the embodiments described before the invention has been implemented by mobile devices such as mobile phones, smartphones, PDAs, or the like. In these embodiments the environment which is tagged is a geographical environment, and the entities which are detected and then tagged preferably are within a certain geographic range.

However, according to a further embodiment the mechanisms of the embodiments of the invention may also be employed to tag and then evaluate virtual environments as can be found e.g. in chatrooms or in case of games. In such a case the "other computing devices" may be detected as being the computing devices of other members present in a chatroom, for example. In such a case the other computing devices do not need to be geographically close but may just be "virtually close" by being in the same chatroom or participating in the same game. The ID detected by the mechanism may e.g. be the nickname of the user participating in the chatroom or in the game, and the detection may be performed then based on information obtained from the provider instead of based on information form a NFC device. However in principle the mechanisms described in the embodiments before may be applied in the same way for tagging and evaluating such social environments like chatrooms or game communities.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a mobile node or a mobile device in a network which is suitably programmed such that it is able to carry out a tagging mechanism as described before.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for tagging an environment with a certain qualitative attribute by a computing device of a user, said method comprising:
detecting by said computing device of said user at least two other computing devices and their respective identifiers which identify them;
compiling a set of information elements which comprises said at least two identifiers identifying said two computing devices;
offering to the user a plurality of qualitative attributes for tagging the environment as represented by said set of information elements:
after said user having selected at least one of sold offered attributes as tag for said environment, storing said tag selected by said user together with said set of Information elements in a storage together with other sets of information elements representing other environments which have previously been tagged, wherein
said set of information elements is composed or created such that it becomes possible to calculate a distance measure or a similarity measure between two sets of information elements representing different environments,
wherein said set of elements comprises said identifiers of computing devices as personal information regarding the presence of individuals in said environment and wherein
a distance measure is calculated based on calculating a personal distance, said personal distance representing a social distance between the groups of persons belonging to different environments.

2. The method of claim 1, wherein said set of elements comprises more than two identifiers of computing devices present in said environment, and/or one or more of the following:
location information of said environment;
time information;
further information characterizing or describing the environment to be tagged by the user.

3. A method for automatically evaluating a certain environment by a computing device, said method comprising;
detecting the presence of other computing devices and automatically generating a set of information elements including identifiers of computing devices which are present in said environment:
storing said set of information elements, and
comparing said generated and stored set of information elements with previously stored sets of information elements describing environments which have been previously-targged in order to identify one or more environments similar to the present one, wherein
said set of elements comprises said identifiers of computing devices as personal information regarding the presence of individuals in said environment and wherein
a distance measure is calculated based on calculating a personal distance, said personal distance representing a social distance between the groups of persons belonging to different environments,

4. The method of claim 3, further comprising:
determining a distance measure between the set of information elements representing the environment to be evaluated and sets of information elements representing previously stored environments in order to find those previously stored environments which are similar to the environment to be evaluated.

5. The method of claim 3 or 4. further comprising:
executing a search for similar environments previously tagged and stored to such environments which fulfil a certain qualitative attribute, and
outputting a notification to a user if a similarity measure for one or more previously stored environments fulfilling the certain selected attribute exceeds a predetermined threshold.

6. The method of claim 3, wherein the said personal distance representing said social distance is calculated based on a social graph.

7. The method of claim 6, wherein said social graph is composed of connections between the persons whose presence has been detected through their computing device, where a connection between two persons in said social graph is based on a parameter or a metric representing their relationship, and wherein said parameter or metric preferably comprises more or a combination of the following:
the number of common encounters of the pair of said two persons in several environments,
the time period how long they have been geographically close to each other,
the geographic distance between them.

8. The method of claims 6 or 7, wherein said set of information elements representing an environment comprises personal information about the presence of persons which is used to calculate a personal or social distance between two environments, and said set of information elements further composing other context parameters describing the context of said environment which can then be used to calculate other distance components, wherein the personal or social distance which has been calculated based on the presence of persons and the other distance components are then combined into a total combined distance representing the distance between two environments.

9. The method of one of claims 3 to 8, further comprising:
automatically determining a qualitative attribute for the present environment, and/or
wherein said computing device of said user and/or said other computing devices are mobile devices.

10. The method of claim 9, wherein if said qualitative attribute is determined said qualitative attribute for said environment to be evaluated is determined based on:
combining attributes of the previously stored environments weighed based on the respective distances of these previously stored environments to the environment to be evaluated, and
thereby calculating an estimate of the attribute or tag value for said environment to be evaluated,

11. A computing device of a user for tagging an environment with a certain qualitative attribute, said computing device compising:
a module for detecting by said computing device of said user at least two other computing devices and their respective identifiers which identify them;
a module for compiling a set of information elements which comprises said at least two identifers identifying said at least other two computing devices
a module for offering to the user a plurality of qualitative attributes for tagging the environment as represented by said set of information elements;
a module for after said user having selected at least one of said offered attribute as tag for said environment, storing said tag selected by said user together with said set of information elements in a storage together with other sets of information elements representing other environments which have previously been tagged wherein
said set of information elements is composed or created such that it becomes possible to calculate a distance measure or a similarity measure between two sets of information elements representing different environments
wherein said set of elements comprises said identifiers of computing devices as personal information regarding the presence of individuals in said environment and wherein
a distance measure is calculated based on calculating a personal distance, said personal distances representing a social distance between the groups of persons belonging to different environments.

12. A computer program comprising computer program code which when being executed on a computer enables said computer to carry out a method according to one of claims 1 to 10.

## Patentansprüche

1. Ein Verfahren zum Markieren einer Umgebung mit einem bestimmten qualitativen Attribut duch eine Rechenvorrichtung eines Benutzers, wobei das Verfahren aufweist:
Detektieren von zumindest zwei anderen Rechenvorrichtungen und ihren jeweiligen Identifizierern, die sie identifizieren, durch die Rechenvorrichtung des Benutzers;
Zusammenstellen eines Satzes von Informationselementen, der zumindest zwei Identifizierer aufweist, die die zwei Rechenvorrichtungen identifizieren;
Anbieten für den Benutzer einer Mehrzahl von qualitativen Attributen zum Markieren der Umgebung wie repräsentiert durch den Satz von Informationselementen;
nachdem der Benutzer zumindest eines der angebotenen Attribute als Markierung für die Umgebung ausgewählt hat, Speichern der durch den Benutzer ausgewählten Markierung zusammen mit dem Satz von Informationselementen in einem Speicher zusammen mit anderen Sätzen von Informationselementen, die andere Umgebungen, die vorher markiert wurden, repräsentieren, wobei
der Satz von Informationselementen so zusammengesetzt oder gebildet wird, dass es möglich wird, ein Distanzmaß oder ein Ähnlichkeitsmaβ zwischen zwei Sätzen von Informationselementen zu berechnen, die unterschiedliche Umgebungen repräsentieren,
wobei der Satz von Informationselementen die Identifizierer von Rechenvorrichtungen als personale Information bezüglich der Präsenz von Individuen in der Umgebung aufweist, und wobei ein Distanzmaß berechnet wird, basierend auf der Berechnung einer personalen Distanz, wobei die personale Distanz eine soziale Distanz zwischen den Gruppen von Personen repräsentiert, die zu unterschiedlichen Umgebungen gehören.

2. Das Verfahren nach Anspruch 1, wobei der Satz von Elementen zwei oder mehr Identifizierer von Rechenvorrichtungen aufweist, die in der Umgebung präsent sind, und/oder ein oder mehrere der Folgenden:
Lokationsinformationen der Umgebung;
Zeitinformationen;
weitere Informationen, die die durch den Benutzer zu markierende Umgebung beschreiben oder charakterisieren.

3. Ein Verfahren zum automatischen Evaluieren einer bestimmten Umgebung durch eine Rechenvorrichtung, wobei das Verfahren aufweist:
Detektieren des Vorhandenseins von anderen Rechenvorrichtungen und automatisches Erzeugen eines Satzes von Informationselementen einschließend Identifizierer von Rechenvorrichtungen, die in der Umgebung vorhanden sind;
Speichern des Satzes von Informationselementen, und
Vergleichen des erzeugten gespeicherten Satzes von Informationselementen mit vorher gespeicherten Sätzen von Informationselementen, die Umgebungen beschreiben, die vorher markiert wurden, um ein oder mehrere Umgebungen zu identifizieren, die ähnlich zu der momentanen sind, wobei der Satz von Informationselementen Identifizierer von Rechenvorrichtungen als personale Information bezüglich der Präsenz von Individuen in der Umgebung aufweist, und wobei
ein Distanzmaß berechnet wird basierend auf der Berechnung einer personalen Distanz, wobei die personale Distanz einen soziale Distanz zwischen den Gruppen von Personen, die zu unterschiedlichen Umgebungen gehören, repräsentiert.

4. Das Verfahren nach Anspruch 3, ferner aufweisend:
Ermitteln eines Distanzmaßes zwischen dem Satz von Informationselementen, die die zu evaluierende Umgebung repräsentieren und Setzen von Informationselementen, die vorher gespeicherte Umgebungen repräsentieren, um diejenigen vorher gespeicherten Umgebungen zu finden, die ähnlich zu der zu evaluierenden Umgebung sind.

5. Das Verfahren nach Anspruch 3 oder 4, ferner aufweisend:
Ausführen einer Suche nach ähnlichen Umgebungen, die vorher markiert wurden und gespeichert wurden zu solchen Umgebungen, die ein bestimmtes qualitatives Attribut erfüllen, und
Ausgeben einer Notifikation an einen Benutzer, wenn ein Ähnlichkeitsmaß für eine oder mehrere vorher gespeicherte Umgebungen, das das bestimmte ausgewählte Attribut erfüllt, einen vorbestimmten Schwellwert überschreitet.

6. Das Verfahren nach Anspruch 3, wobei die personale Distanz, die die soziale Distanz repräsentiert, basierend auf einem sozialen Graphen berechnet wird.

7. Das Verfahren nach Anspruch 6, wobei der soziale Graph gebildet wird durch Verbindungen zwischen den Personen, deren Präsenz detektiert wurde durch ihre Rechenvorrichtung, wobei eine Verbindung zwischen zwei Personen in dem sozialen Graphen basiert auf einem Parameter oder einer Metrik, die ihre Beziehung repräsentiert, und wobei der Parameter oder die Metrik vorzugsweise eine oder mehrere oder eine Kombination der Folgenden aufweist:
die Anzahl von gemeinsamen Begegnungen des Paars der zwei Personen in unterschiedlichen Umgebungen;
die Zeitdauer für wie lange sie geographisch beieinander waren, den geographischen Abstand zwischen ihnen.

8. Das Verfahren nach Anspruch 6 oder 7, wobei der Satz von Informationselementen, der eine Umgebung repräsentiert, personale Informationen über die Präsenz von Personen aufweist, die verwendet wird, um eine personale oder soziale Distanz zwischen zwei Umgebungen zu berechnen, und wobei der Satz von Informationselementen ferner aufweist:
andere Kontextparameter, die den Kontext der Umgebung beschreiben, und die dann verwendet werden können, um andere Distanzkomponenten zu berechnen, wobei die personale oder soziale Distanz, die berechnet wurde basierend auf der Präsenz von Personen und die anderen Distanzkomponenten dann kombiniert werden zu einer totalen kombinierten Distanz, die die Distanz zwischen zwei Umgebungen repräsentiert.

9. Das Verfahren nach einem der Ansprüche 3 bis 8, ferner aufweisend:
automatisches Ermitteln eines qualitativen Attributs für die momentane Umgebung, und/oder
wobei die Rechenvorrichtung des Benutzers und/oder die Rechenvorrichtungen mobile Geräte sind.

10. Das Verfahren nach Anspruch 9, wobei falls das qualitative Attribut ermittelt wird, das qualitative Attribut für die Umgebung, die evaluiert werden soll, ermittelt wird basierend auf:
dem Kombinieren von Attributen der vorher gespeicherten Umgebungen, gewichtet basierend auf den jeweiligen Distanzen dieser vorher gespeicherten Umgebungen zu der zu evaluierenden Umgebung und
**dadurch** Berechnen einer Abschätzung des Attributs oder Markierungswerts für die zu evaluierende Umgebung.

11. Eine Rechenvorrichtung eines Benutzers zum Markieren einer Umgebung mit einem bestimmten qualitativen Attribut, wobei die Rechenvorrichtung aufweist:
ein Modul zum Detektieren von zumindest zwei anderen Rechenvorrichtungen und ihren jeweiligen Identitizierern, die sie identifizieren, durch die Rechenvorrichtung des Benutzers;
ein Modul zum Zusammenstellen eines Satzes von Informationselementen, der zumindest zwei Identifizierer aufweist, die die zwei Rechenvorrichtungen identifizieren;
ein Modul zum Anbieten für den Benutzer einer Mehrzahl von qualitativen Attributen zum Markieren der Umgebung wie repräsentiert durch den Satz von Informationselementen;
ein Modul zum, nachdem der Benutzer zumindest eines der angebotenen Attribute als Markierung für die Umgebung ausgewählt hat, Speichern der durch den Benutzer ausgewählten Markierung zusammen mit dem Satz von Informationselementen in einem Speicher zusammen mit anderen Sätzen von Informationselementen, die andere Umgebungen, die vorher markiert wurden, repräsentieren, wobei
der Satz von Informationselementen so zusammengesetzt oder gebildet wird, dass es möglich wird, ein Distanzmaß oder ein Ähnlichkeitsmaß zwischen zwei Sätzen von Informationselementen zu berechnen, die unterschiedliche Umgebungen repräsentieren,
wobei der Satz von Informationselementen die Identifizierer von Rechenvorrichtungen als personale Information bezüglich der Präsenz von Individuen in der Umgebung aufweist, und wobei ein Distanzmaß berechnet wird, basierend auf der Berechnung einer personalen Distanz, wobei die personale Distanz eine soziale Distanz zwischen den Gruppen von Personen repräsentiert, die zu unterschiedlichen Umgebungen gehören.

12. Ein Computerprogramm aufweisend Computerprogrammcode, der wenn er auf einem Computer ausgeführt wird, den Computer in die Lage versetzt, ein Verfahren gemäß einem der Ansprüche 1 bis 10 auszuführen.

## Revendications

1. Procédé de marquage d'un environnement avec un certain attribut qualitatif par un dispositif informatique d'un utilisateur, ledit procédé comprenant :
la détection par ledit dispositif informatique dudit utilisateur d'au moins deux autres dispositifs informatiques et de leurs identifiants respectifs qui les identifient ;
la compilation d'un ensemble d'éléments d'information comprenant lesdits au moins deux identifiants qui identifient lesdits deux dispositifs informatiques ;
la proposition à l'utilisateur d'une plurality d'attributs qualitatifs pour marquer l'environnement tel que représenté par ledit ensemble d'éléments d'information ;
après que ledit utilisateur a sélectionné au moins l'un desdits attributs proposés en tant que marquage dudit environnement, le stockage dudit marquage sélectionné par ledit utilisateur avec ledit ensemble d'éléments d'information dans un stockage avec d'autres ensembles d'éléments d'information représentant d'autres environnements ayant été précédemment marqués, dans lequel
ledit ensemble d'éléments d'information est composé ou créé de manière à ce qu'il devienne possible de calculer une mesure de distance ou une mesure de similarité entre deux ensembles d'éléments d'information représentant différents environnements,
dans lequel ledit ensemble d'éléments comprend lesdits identifiants de dispositifs informatiques en tant qu'informations personnelles concernant la présence d'individus dans ledit environnement, et dans lequel
une mesure de distance est calculée sur la base du calcul d'une distance personnelle, ladite distance personnelle représentant une distance sociale entre les groupes de personnes appartenant à différents environnements.

2. Procédé selon la revendication 1, dans lequel ledit ensemble d'éléments comprend plus de deux identifiants de dispositifs informatiques présents dans ledit environnement, et/ou une ou plusieurs de ce qui suit :
une information d'emplacement dudit environnement ;
une information de temps ;
une autre information caractérisant ou décrivant l'environnement marquer par l'utilisateur.

3. Procédé d'évaluation automatique d'un certain environnement par un dispositif informatique, ledit procédé comprenant :
la détection de la présence d'autres dispositifs informatiques et la génération automatique d'un ensemble d'éléments d'information comprenant des identifiants de dispositifs informatiques qui sont présents dans ledit environnement ;
le stockage dudit ensemble d'éléments d'information ; et
la comparaison dudit ensemble généré et stocké d'éléments d'information à des ensembles précédemment stockés d'éléments d'information décrivant des environnements précédemment marqués afin d'identifier un ou plusieurs environnements similaires à l'environnement présent, dans lequel
ledit ensemble d'éléments comprend lesdits identifiants des dispositifs informatiques en tant qu'informations personnelles concernant la présence d'individus dans ledit environnement, et dans lequel
une mesure de distance est calculée sur la base du calcul d'une distance personnelle, ladite distance personnelle représentant une distance sociale entre les groupes de personnes appartenant à différents environnements.

4. Procédé selon la revendication 3, comprenant en outre :
la détermination d'une mesure de distance entre l'ensemble d'éléments d'information représentant l'environnement à évaluer et des ensembles d'éléments d'information représentant des environnements précédemment stockés afin de trouver parmi les environnements précédemment stockés ceux qui sont similaires à l'environnement à évaluer.

5. Procédé selon la revendication 3 ou 4, comprenant en outre :
l'exécution d'une recherche d'environnements précédemment marqués et stockés similaires à de tels environnements ayant un certain attribut qualitatif, et
la délivrance d'une notification à un utilisateur si une mesure de similarité pour un ou plusieurs environnements précédemment stockés ayant l'attribut sélectionné dépasse un seuil prédéterminé.

6. Procédé selon la revendication 3, dans lequel ladite distance personnelle représentant ladite distance sociale est calculée sur la base d'un graphique social.

7. Procédé selon la revendication 6, dans lequel ledit graphique social se compose de connexions entre les personnes dont la présence a été détectée par le biais de leurs dispositifs informatiques, où une connexion entre deux personnes dans ledit graphique social est basée sur un paramètre ou une métrique représentant leur relation, et dans lequel ledit paramètre ou ladite métrique comprend de préférence un ou plusieurs ou une combinaison de ce qui suit :
le nombre de rencontres communes de la paire desdites deux personnes dans plusieurs environnements ;
la période de temps au cours de laquelle elles ont été géographiquement proches l'une de l'autre ;
la distance géographique entre elles.

8. Procédé selon la revendication 6 ou 7, dans lequel ledit ensemble d'éléments d'information représentant un environnement comprend des informations personnelles sur la présence de personnes qui sont utilisées pour calculer une distance personnelle ou sociale entre deux environnements, et ledit ensemble d'éléments d'information comprenant en outre d'autres Paramètres de contexte décrivant le contexte dudit environnement qui peuvent ensuite être utilisés pour calculer d'autres composants de distance, dans lequel la distance personnelle ou sociale qui a été calculée sur la base de la présence de personnes et les autres composantes de distance sont ensuite combinées dans une distance combinée totale représentant la distance entre deux environnements.

9. Procédé selon l'une des revendications 3 à 8, comprenant en outre :
la détermination automatique d'un attribut qualitatif pour l'environnement présent, et/ou
dans lequel ledit dispositif informatique dudit utilisateur et/ou lesdits autres dispositifs informatiques sont des dispositifs mobiles.

10. Procédé selon la revendication 9, dans lequel si ledit attribut qualitatif est déterminé, ledit attribut qualitatif pour ledit environnement à évaluer est déterminé sur la base de :
la combinaison d'attributs des environnements précédemment stockés pondérés sur la base des distances respectives de ces environnements précédemment stockés à l'environnement à évaluer, et
le calcul de ce fait d'une estimation de la valeur d'attribut ou de marquage pour ledit environnement à évaluer.

11. Dispositif informatique d'un utilisateur pour marquer un environnement avec un certain attribut qualitatif, ledit dispositif informatique comprenant :
un module pour la détection par ledit dispositif informatique dudit utilisateur d'au moins deux autres dispositifs informatiques et de leurs identifiants respectifs qui les identifient ;
un module pour la compilation d'un ensemble d'éléments d'information comprenant lesdits au moins deux identifiants qui identifient lesdits au moins deux autres dispositifs informatiques ;
un module pour la proposition à l'utilisateur d'une pluralité d'attributs qualitatifs pour marquer l'environnement tel que représenté par ledit ensemble d'éléments d'information ;
un module pour, après que ledit utilisateur a sélectionné au moins l'un desdits attributs proposés en tant que marquage dudit environnement, le stockage dudit marquage sélectionné par ledit utilisateur avec ledit ensemble d'éléments d'information dans un stockage avec d'autres ensembles d'éléments d'information représentant d'autres environnements ayant été précédemment marqués, dans lequel
ledit ensemble d'éléments d'information est composé ou créé de manière à ce qu'il devienne possible de calculer une mesure de distance ou une mesure de similarité entre deux ensembles d'éléments d'information représentant différents environnements,
dans lequel ledit ensemble d'éléments comprend lesdits identifiants de dispositifs informatiques en tant qu'informations personnelles concernant la présence d'individus dans ledit environnement, et dans lequel
une mesure de distance est calculée sur la base du calcul d'une distance personnelle, ladite distance personnelle représentant une distance sociale entre les groupes de personnes appartenant à différents environnements.

12. Programme informatique comprenant un code de programme informatique qui, lorsqu'il est exécuté sur un ordinateur, permet au dit ordinateur d'effectuer un procédé selon l'une des revendications 1 à 10.
